# EUROPEAN PATENT APPLICATION

(11) **EP 2 677 680 A1**
(43) Date of publication of application: **25.12.2013**
(21) Application number: 12172548.5
(22) Date of filing: 19.06.2012
(51) Int. Cl.: H04L 9/00

(54) **Processing operational data of an industrial system**

(71) Applicant: ABB Research Ltd., 8050 Zürich (CH)
(72) Inventor: Steiger, Olivier, 8032 Zürich (CH); Maret, Yannick, 5405 Dättwil (CH)
(74) Representative: ABB Patent Attorneys

(57) **Abstract**

A method for processing operational data 30 of an industrial system 12 comprises the steps of: gathering operational data 30 of the industrial system 12 with a control system 18 of the industrial system 12; encrypting the operational data 30 with a homomorphic encryption scheme in the control system 18; sending the encrypted operational data 32 to a data processing system 26 which is adapted to perform a data processing function on the encrypted operational data 32 to generate result data 34; receiving the result data 34 of the data processing function in the control system 18; and processing the result data 34 in the control system 18.

## Description

### FIELD OF THE INVENTION

The invention relates to a method, a computer program and a computer-readable medium for processing operational data of an industrial system as well as to a device for an industrial control system.

### BACKGROUND OF THE INVENTION

Nowadays, all industrial systems like power plants or power substations comprise a control system that monitors and controls the equipment of the industrial system. Such a control systems usually gathers and stores large amounts of operational data, like measurement data from sensors, control data for controlling actuators and configuration data for the control devices associated with as specific primary device.

In order to provide customer services by a service provider, such as remote diagnostics, repair and maintenance, the control system may be accessed locally or remotely. This in turn may imply at least partial access to the operational data by the service provider. For instance in an electrical substation, switching history, current/voltage measurements and temperature readings may be accessed (or some statistics thereof). These data typically provide business-relevant information about quality of service, revenues, etc. Therefore, the owner or operator of an industrial system, i.e. the customer of the service provider, is often reluctant to share his operational data with the service provider.

Privacy concerns are usually handled in one of the following ways:
(i) Access is only granted to non-sensitive data. This may limit the possible customer services.
(ii) Partial or full access to sensitive data is granted on a contractual basis (for example a confidentiality agreement). In this case, full services may be provided, but mutual trust is presupposed.
(iii) No access is granted to any data and customer services that rely on operational data from the customer are prevented.

On the other hand, sophisticated data analysis (not just merely computing averages) may be a proprietary knowledge of a service provider, who does not want to provide his algorithms to the customer and thus likewise desires confidentiality.

### DESCRIPTION OF THE INVENTION

Privacy concerns often prevent owners of industrial systems from granting access to their operational data. This may put restrictions on the type, quality and amount of services that can be provided by a service provider.

It is an object of the invention to simplify customer services on operational data of an industrial system without violating the privacy of both the operator of the industrial system and the service provider.

This object is achieved by the subject-matter of the independent claims. Further exemplary embodiments are evident from the dependent claims and the following description.

An aspect of the invention relates to a method for processing operational data of an industrial system. For example, the industrial system is a power plant, an electrical substation, a power distribution network, a chemical plant, a metallurgical plant, or any subcomponents thereof such as transformers and reactors, or a turbocharger. The invention may be applied to any kind of industrial system that has a digital control system for monitoring its processes.

According to an embodiment of the invention, the method comprises the steps of: acquiring or gathering, and optionally converting, operational data of the industrial system with a control system of the industrial system; encrypting the operational data with a homomorphic encryption scheme in the control system; sending the encrypted operational data to a data processing system which is adapted to perform a data processing function on the encrypted operational data to generate result data; receiving the result data of the data processing function in the control system; and evaluating or further processing the result data in the control system.

Summarized, operational data of an industrial system is encrypted with a homomorphic encryption scheme, which enables the processing of the operational data without decrypting it. In such a way, both the privacy of the operator of the industrial system and the privacy of a service provider operating the data processing system may be preserved. The quantity and quality of services may be increased by eliminating concerns about customer privacy.

Privacy problems may be circumvented by relying on a class of encryption schemes called homomorphic encryption schemes. Homomorphic encryption schemes allow performing meaningful computation (algebraic operations, statistical analysis) on the encrypted information without deciphering it. In other words, useful operations may be performed on the data without deciphering.

For example, when g is an operation or function compatible with a homomorphic encryption scheme H, and d is operational data, then g( H(d) ) = H (g (d) ). In a simple case, when g is multiplication, then H(d₁) * H(d₂) = H ( d₁ * d₂ ).

In such a way, the service provider may perform operations on operational data of a customer without access to the plaintext (i.e., the unencrypted data), and without the service provider having to disclose his algorithms to the customer. This may allow gathering statistical information about the operational data or otherwise manipulating the operational data in a useful way, without gaining any knowledge about the specifics of the operational data.

As an example, the service provider may compute, in a sophisticated way, an encrypted value of an average or forecast power production of an electrical plant without knowing the specifics of current/voltage production (i.e., how much is produced at what moment).

It has to be noted that operational data may be any data relating to the process performed in the industrial system, like measurement and control values, and relating to the devices of the industrial system, like configuration data of controllers of the industrial control system.

According to an embodiment of the invention, the method further comprises the step of: performing a data processing function of the data processing system on the encrypted operational data, wherein the data processing function is compatible with the homomorphic encryption scheme. In "Craig Gentry: Computing arbitrary functions of encrypted data, Commun. ACM 53(3): 97-105 (2010)" it has been proven that it is possible to define a homomorphic encryption scheme that allows the execution of any function on encrypted data.

Homomorphic encryption schemes may be classified according to their limitations with respect to compatible functions. Fully homomorphic encryption schemes are compatible with an arbitrary number of additions and multiplications on encrypted data. Thus, all data processing function comprising polynomial operations may be compatible with a fully homomorphic encryption scheme. In general, the data processing function may be a concatenation of algebraic operations compatible with the homomorphic encryption scheme.

Furthermore, there are so-called partially or somewhat homomorphic encryption schemes that allow a fixed number of predefined computations by the data processing function. A somewhat homomorphic encryption scheme is limited to evaluating low-degree polynomials over encrypted data.

In short, a data processing function may be realized as algebraic operations on encrypted data, for example with any linear operation on encrypted data. Depending on the data processing function, this may require a fully or somewhat homomorphic encryption scheme.

In the case of predefined operations compatible with homomorphic encryption schemes, the data processing function may be based on statistical functions on encrypted data. Statistical functions such as the mean, standard deviation and logistical regressions may be performed and may be compatible with the homomorphic encryption scheme. For these functions, it may suffice to have a somewhat homomorphic encryption system which is compatible with many additions and a small number of multiplications.

According to an embodiment of the invention, the result data of the data processing function is unencrypted. For example, when the data processing is performing a counting operation on the encrypted operational data, the result value is not encrypted.

According to an embodiment of the invention, the result data of the data processing function is encrypted. This is usually the case, when an algebraic operation is performed on the encrypted operational data, for example a statistical function.

According to an embodiment of the invention, the method further comprises the step of: decrypting the result data of the data processing function in the control system. By applying the data processing function on the encrypted operational data, the result data also may be encrypted with the homomorphic encryption scheme. In general, a homomorphic encryption scheme may be invertible or reversible. In such a way, the result data may be decrypted to plain text by the industrial control system.

According to an embodiment of the invention, the data processing function comprises a diagnostic function, and the result data comprises a diagnostic message. Such diagnostic messages may comprise warnings, alerts, recommendations and/or aging indicators of devices.

According to an embodiment of the invention, the operational data comprises obsolete configuration data of the industrial control system. The encrypted obsolete configuration data is updated by the data processing system. Then, the updated encrypted configuration data (as result data) is decrypted by the control system, and the obsolete configuration data is replaced by the updated configuration data. In other words, configuration data that has to be replaced, for example to remain compatible with updated firmware, may be updated in an encrypted way by the service provider. In such a way, privacy may be preserved even for customer-specific configuration parameter.

According to an embodiment of the invention, the encrypted operational data is stored for backup in the data processing system. In such a way, the operational data may be updated to new data formats by the service provider without knowing the content of the operational data and/or may be stored for backup purposes.

A further aspect of the invention relates to a computer program for processing operational data of an industrial system, which, when being executed by at least one processor, is adapted to carry out the steps of the method as described in the above and in the following.

The processors may be the processor of a device of the control system and a processor of the data processing system.

A further aspect of the invention relates to a computer-readable medium, in which such a computer program is stored.

A computer-readable medium may be a floppy disk, a hard disk, an USB (Universal Serial Bus) storage device, a RAM (Random Access Memory), a ROM (Read Only Memory) and an EPROM (Erasable Programmable Read Only Memory) or any other storage device. A computer-readable medium may also be a data communication network, e.g. the Internet, which allows downloading a program code.

A further aspect of the invention relates to a device for an industrial control system. For example, the device may be a monitoring system of the industrial system.

It has to be understood that features of the method as described in the above and in the following may be features of the device as described in the above and in the following and vice versa.

According to an embodiment of the invention, the device is adapted for gathering operational data of an industrial system, encrypting the industrial data with a homomorphic encryption scheme in the control system, sending the encrypted data to a data processing system, receiving result data from the data processing system, and processing the result data.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an industrial system according to an embodiment of the invention.
Fig. 2 shows a flow diagram for a method for processing operational data according to an embodiment of the invention.
Fig. 3 shows a diagnostics method according to an embodiment of the invention.
Fig. 4 shows an optimization method according to an embodiment of the invention.
Fig. 5 shows a patching and upgrading method according to an embodiment of the invention.
Fig. 6 shows a backup method according to an embodiment of the invention.

In principle, identical parts are provided with the same reference symbols in the figures.

### DETAILED DESCRIPTION OF EXEMPLARY EMBODIMENTS

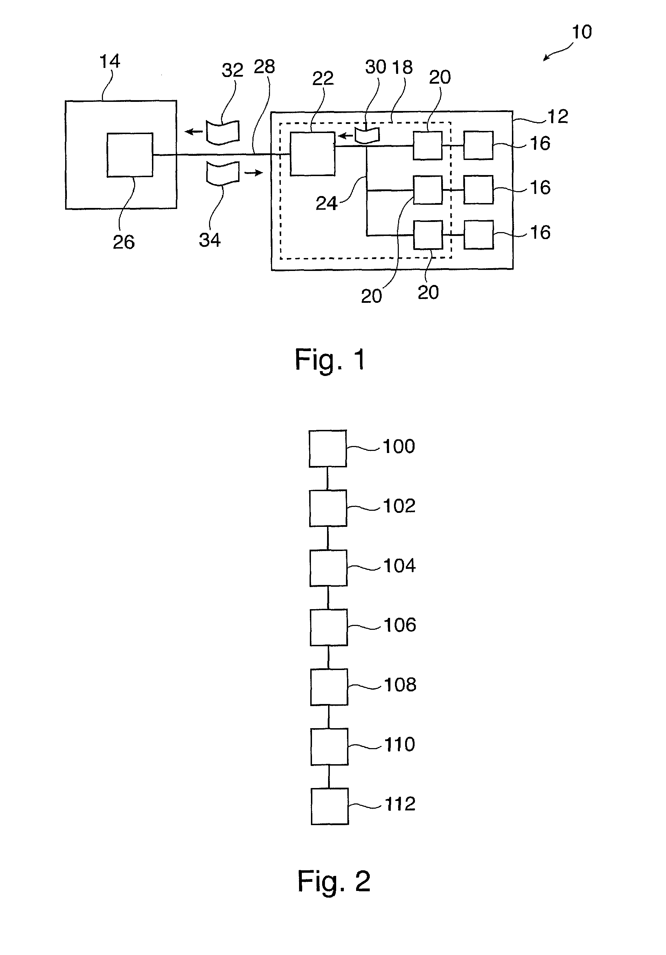

Fig.1 shows a system 10 comprising an industrial system 12 and a service provider system 14. For example, the industrial system 12 may be an electrical distribution, an electrical plant, a petrochemical plants, etc.

The industrial system 12 comprises a plurality of primary devices 16, like switches, valves, sensors, etc., and a industrial control system 18 with secondary devices or controllers 20 that may control a respective primary device 16 and/or may receive operational data like measurement values from the primary device 16.

The industrial control system 18 comprises further a device or system 22 for gathering operational data that is communicatively connected to the other components 20 of the industrial control system 18, for example with an internal communication network 22.

Furthermore, the industrial control system 18 is adapted to communicate with a data processing system 26 of the service provider via a second communication network 28, for example an external communication network 28 like the Internet.

As will be explained in more detail in the following, the device 22 is adapted for gathering operational data 30, for sending encrypted operational data 32 to the data processing system 26, and for receiving result data 34 from the data processing system 26.

Fig. 2 shows a flow diagram for a method for processing operational data 30 of the industrial system 12 that may be performed by the device 22 and the data processing system 26. The method may be performed by one or more computer programs installed in the device 22 and the data processing system 26.

In step 100, operational data 30 of the industrial system 12 is gathered with the device 22. For example, the device 22 may receive and store measurement data, control data and/or configuration data from the controllers 20 via the communication network 24.

In step 102, the gathered operational data 30 is encrypted with a homomorphic encryption scheme by the device 22. Usually, a private key stored in the device 22 is used for encrypting the operational data 30, and the homomorphic encryption scheme is implemented in a software module in the device 22.

In step 104, the encrypted operational data 32 is sent to the data processing system 26 via the network 28. Since the network 28 may be a public network, due to the encryption, the privacy of the operator of the industrial system 12 is respected in any case.

In step 106, the data processing system 26 performs a data processing function on the encrypted operational data 32 to generate result data 34. If the data processing function is compatible with the homomorphic encryption scheme, the result data may be generated without any knowledge of the content of the operational data.

As already described, different kinds of homomorphic encryption scheme may be used for encrypting the data. Some homomorphic encryption schemes allow for simple computations (like additions, multiplications) on encrypted data 32.

Fully homomorphic encryption schemes are capable of evaluating an arbitrary number of additions and multiplications on encrypted data 32. In this case, the data processing function may be any linear function.

Somewhat homomorphic encryption schemes allow only a fixed number of computations on encrypted data 32. In this case, the data processing function may compute statistical functions such as a mean, a standard deviation or logistical regressions.

In step 108, the result data 34 is sent back via the network 28 and is received in the control system 18.

In step 110, when necessary, the result data 34 is decrypted with the homomorphic encryption scheme. Again, the private key of the operator of the industrial system 10 may be applied. Summarized, the operational data 30 has been transmitted via the network 28 and processed by the service provider 14 without the necessity of sharing a private or public key with the service provider and without decrypting data outside of the control system 18 of the operator of the industrial system 12.

In step 112, the result data 34 is processed in the control system 18. For example, the result data 34 may be used to adapt control functions to new statistical evaluations, to update configuration data or to provide messages about the state of the system 12.

The method for processing the operational data may be used in following service scenarios.

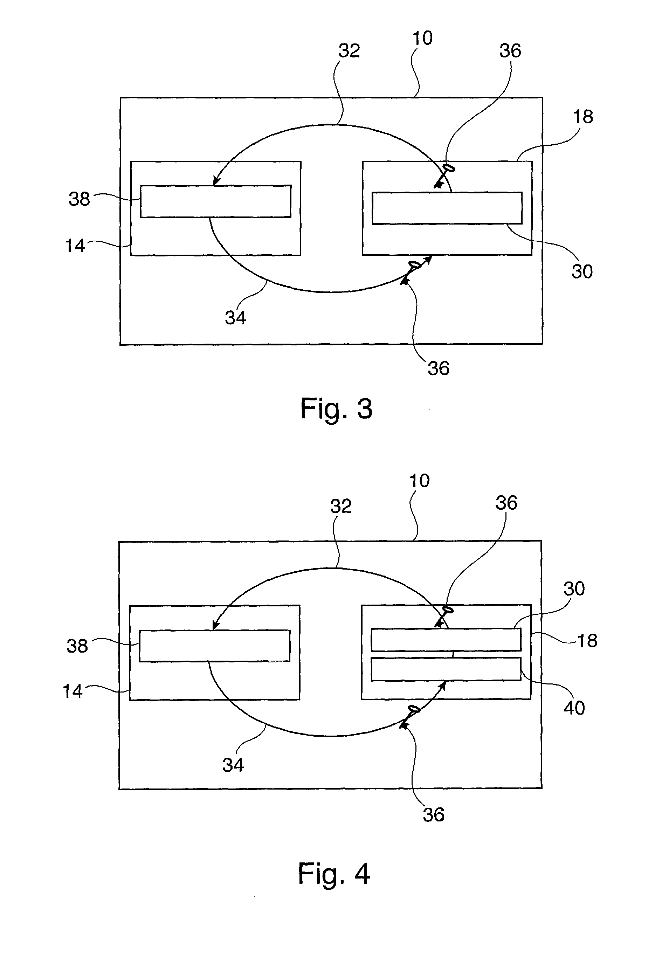

Fig. 3 (and the following figures) shows the system 10 of Fig. 1 more schematically and describes a diagnostic method that may be performed as an embodiment of the method shown in Fig. 2.

The system 10 comprises the industrial control system 12 as a customer's installation 12 and the service provider 14.

All data pertaining to the operation of the industrial control system 12, i.e. operational data 30 may be encrypted and stored locally or sent to the service provider 14. For the encryption a homomorphic encryption scheme with a private key 36 is used. The encrypted operational data 32 is sent to the service provider 14 and not decrypted.

At the service provider, a statistical analysis 38 as data processing function is performed on the encrypted operational data 32. The statistical analysis 38 may be a proprietary algorithm.

Using a somewhat homomorphic encryption scheme, the service provider 14 may compute statistical functions 38 on the encrypted operational data 32 and may compute result data 34, which may be or which at least may be a basis for alerts or recommendations based on the operational data 30. Alerts may include malfunctions or inadequate operating conditions. Recommendations may include necessary, upcoming replacements of components based on aging indicators.

Unencrypted result data 34 may be provided by the service provider 14, for example, if the service provider 14 receives an encrypted threshold to compare the encrypted average against, or, for example, if the statistical function 38 reports anomalies in time (which may manifest also in encrypted form, e.g. exceptional variance).

Alternatively, encrypted statistics or aggregate result data 34 may be returned by the service provider 14 and may be decrypted with the private key 36 in the industrial control system 18 to derive appropriate measures, for example under the instruction of the service provider 14.

Fig. 4 shows an optimization method analogously to the method of Fig. 3.

The service provider 14 may perform a statistical analysis 38 on the encrypted operational data 32 in order to provide recommendations about the operating conditions (configuration parameters, I/O) of the installation of the industrial system. Therefore, the operational data 30 may comprise configuration parameters 40 of the industrial control system 18.

This way, the service provider 14 can check whether the installation is operated optimally without knowing the details about its condition. For example, during the statistical analysis 38, concatenated events may be counted that are part of one lumped data file that has been homomorphically encrypted as a whole.

Furthermore, the encrypted configuration parameters 32 may be optimized during the data processing 38 and may be sent in encrypted form as result data 34 back to the industrial control system 18, which may decrypt and process them, for example to replace the configuration parameters 40.

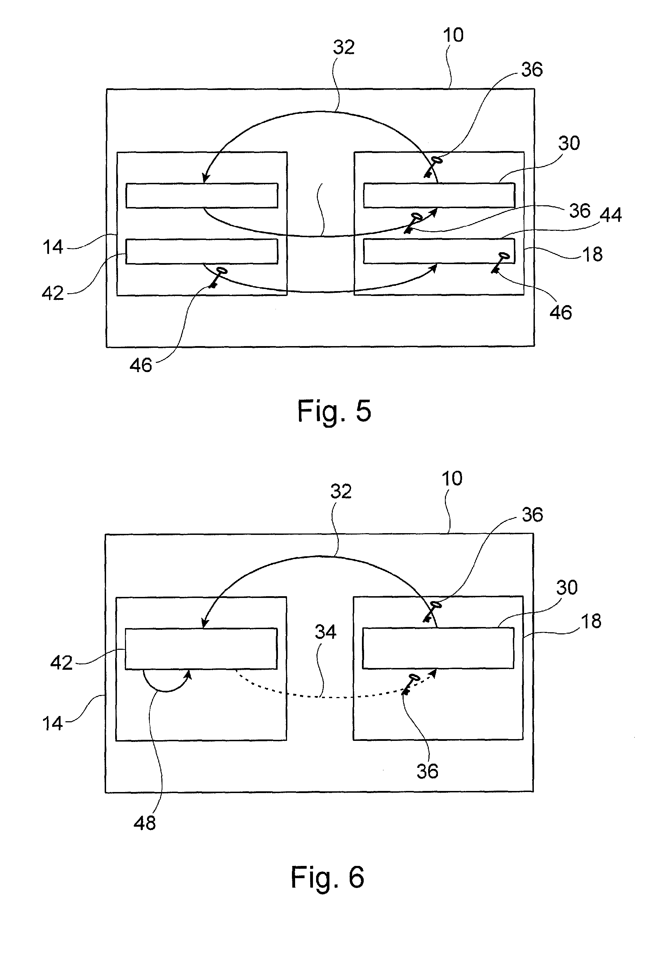

Fig. 5 shows a patching and upgrading method analogously to the methods of Figs. 3 and 4.

With the method of Fig. 5, it is possible to apply patches or upgrades to the control system 18 without disclosing the specifics of these updates. This may be achieved by using the following scheme:

The updated firmware 42 is encrypted (for example using non-homomorphic encryption) and may be installed on the control system 18 in encrypted form 44. The control system 18 may decrypt the encrypted updated firmware 44 at runtime or may decrypt it at reception and may store it in a memory section protected from the access of the operator of the industrial system 12. For encryption and decryption, a private key 46 may be necessary at the service provider 14 and at the control system 18.

Sometimes, operational data 30 (for example configuration files, log data) has to be modified to remain compatible with the updated firmware 42, 44. For instance, operational data 30 has to be complemented with additional parameters or converted to new data formats. This may be achieved by using fully homomorphic encryption: the service provider 14 may apply modifications (algebraic operations) to the encrypted operational data 32 without gaining access to this data. The updated encrypted data 34 is subsequently decrypted in the control system 18. Although the operator of the industrial system 12 may know the original data 32 and the updated data 34, he still may have difficulty deriving the details of the update algorithm.

With this method, privacy of both the operator (on operational data 30) and of the service provider 14 (on firmware 42) is independently preserved.

Fig. 5 shows a backup method analogously to the methods of Figs. 3 to 5.

The operational data 30 may be provided to the service provider 14 in encrypted form 32 for backup. The service provider 14 stores (backs up) the encrypted operational data 32 without ever decrypting it. The encrypted operational data 32 may be continuously upgraded (see 48), for example to conform to new firmware in the control system 18. When a new release of a firmware is released, the service provider 14 may upgrade the stored operational data 34 accordingly, for example using fully homomorphic encryption. The upgrade may be performed analogously to Fig. 5. In this way, backups (for example of a substation configuration) are always compatible with the latest firmware and may be quickly restored if necessary.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for processing operational data (30) of an industrial system (12), the method comprising the steps of:
acquiring operational data (30) of the industrial system (12) with a control system (18) of the industrial system (12);
encrypting the operational data (30) with a homomorphic encryption scheme in the control system (18);
sending the encrypted operational data (32) to a data processing system (26)
performing a data processing function on the encrypted operational data (32) to generate result data (34);
receiving the result data (34) of the data processing function in the control system (18);
evaluating the result data (34) in the control system (18).

2. The method of claim 1, further comprising the step of:
performing a data processing function of the data processing system (26) on the encrypted operational data (32), wherein the data processing function is compatible with the homomorphic encryption scheme.

3. The method of claim 1 or 2,
wherein the result data (34) of the data processing function is unencrypted.

4. The method of claim 1 or 2,
wherein the result data (34) of the data processing function is encrypted; and
the method further comprising the step of:
decrypting the result data (34) of the data processing function in the control system (18).

5. The method of one of the preceding claims,
wherein the data processing function is a concatenation of algebraic operations compatible with the homomorphic encryption scheme.

6. The method of one of the preceding claims,
wherein the data processing function comprises a statistical function compatible with the homomorphic encryption scheme.

7. The method of one of the preceding claims,
wherein the data processing function comprises a diagnostics function and the result data comprises a diagnostic message.

8. The method of one of the preceding claims,
wherein the operational data (30) comprises obsolete configuration data of the industrial control system (18);
wherein the encrypted obsolete configuration data (32) is updated by the data processing system (26);
wherein the updated encrypted configuration data (34) is decrypted and the obsolete configuration data is replaced by the updated configuration data.

9. The method of one of the preceding claims,
wherein the encrypted operational data (30) is stored for backup in the data processing system (18).

10. The method of one of the preceding claims,
wherein the data processing system (26) is a service provider system.

11. The method of one of the preceding claims,
wherein the industrial system (12) is one of a power plant, a chemical plant, an electrical substation, a power distribution network, a metallurgical plant, or any subcomponents thereof.

12. A computer program for processing operational data of an industrial system, which, when being executed by a processor, is adapted to carry out the steps of the method of one of claims 1 to 11.

13. A computer-readable medium, in which a computer program according to claim 12 is stored.

14. A device (22) for an industrial control system (18),
wherein the device is adapted for acquiring operational data (30) of an industrial system (12);
wherein the device is adapted for encrypting the industrial data (30) with a homomorphic encryption scheme in the control system;
wherein the device is adapted for sending the encrypted operational data (32) to a data processing system (26);
wherein the device is adapted for receiving result data (34) from the data processing system (26);
wherein the device is adapted for evaluating the result data (34).
